# EUROPEAN PATENT APPLICATION

(11) **EP 3 220 010 A1**
(43) Date of publication of application: **20.09.2017**
(21) Application number: 17161886.1
(22) Date of filing: 20.03.2017
(51) Int. Cl.: F16H 7/02, F16H 7/08

(54) **DRIVE ASSEMBLY WITH ROTATOR SYSTEM**

(30) Priority: 18.03.2016 US 201662310055 P
(71) Applicant: CMI Roadbuilding Ltd., Leicester LE4 6GH (GB)
(72) Inventor: MUSIL,, Joseph E., Ely, IA 52227 (US)
(74) Representative: Carpmaels & Ransford LLP

(57) **Abstract**

A drive assembly having a rotator system and including a drive pulley, a driven pulley spaced apart from the drive pulley, a drive belt, a rotator pulley, and a rotator belt. The driven pulley supports a tool assembly, and the drive belt is connected to the drive pulley and the driven pulley. The drive belt is selectively tensioned to couple the drive pulley and the driven pulley so that rotation of the drive pulley causes the driven pulley to rotate and de-tensioned to decouple the drive pulley and the driven pulley allowing the drive pulley to rotate without causing the driven pulley to rotate. The rotator belt couples the rotator pulley and the driven pulley in a way that when the drive belt is decoupled from the drive pulley and the driven pulley rotation of the rotator pulley causes the driven pulley and the tool assembly to rotate.

## Description

### CROSS REFERENCE TO RELATED APPLICATIONS

This application claims priority to U.S. Provisional Application Serial No. 62/310,055 filed March 18, 2016, the entire contents of which being hereby expressly incorporated herein by reference.

### BACKGROUND

Machines such as road milling machines, reclaimer stabilizers, stump grinders, agricultural rotary soil preparers, and others typically have tool assemblies that include a rotary drum, disc, or shaft apparatus with cutters or other implements mounted to the drum, disc, or shaft apparatus. As rotation occurs, the cutters and implements perform their respective beneficial function, but as time passes the cutters and implements need inspection, maintenance, repair, or replacement. This inspection, maintenance, or replacement activity can consume considerable amounts of time, must often be done in somewhat tight spaces, and must be done safely. Because the cutters and implements are mounted in a circumferential manner circumscribing the drum, disc, or shaft, it is necessary to rotate the drum, disc or shaft to bring the cutters and implements to a location where a service access is provided.

Because it is often necessary for a rotary shaft, drum, or disc apparatus to turn at relatively slow speed in relation to the engine that powers them, a gearbox or speed reduction unit is used. As a result, it can be very difficult or impossible for the person doing the inspection, maintenance or replacement work to directly turn the apparatus by hand. Generally, too much friction exists in the bearing, seals, and in the gearbox for them to overcome. Because of this, mechanical assistance is necessary to turn the apparatus. It is the purpose of this disclosure to provide a system for rotating a rotary shaft, drum, or disc apparatus that is always in a ready to use condition.

### BRIEF DESCRIPTION OF THE DRAWINGS

FIG. 1 is a front elevation view of a drive assembly with a rotator system shown in an engaged or running position in accordance with one embodiment of the presently disclosed inventive concepts.
FIG. 2 is a side elevation view of the rotator system of FIG. 1.
FIG. 3 is a front elevation view of an adjustable mounting bracket for a rotator power source of the rotator system.
FIG. 4 is a front elevation view of another embodiment of an adjustable mounting bracket for the rotator power source.
FIG. 5 is a side elevation view of a one way rotational clutch.

### DETAILED DESCRIPTION OF EXEMPLARY EMBODIMENTS

Before explaining at least one embodiment of the disclosure in detail, it is to be understood that the disclosure is not limited in its application to the details of construction, experiments, exemplary data, and/or the arrangement of the components set forth in the following description or illustrated in the drawings unless otherwise noted.

The systems and methods as described in the present disclosure are capable of other embodiments or of being practiced or carried out in various ways. Also, it is to be understood that the phraseology and terminology employed herein is for purposes of description, and should not be regarded as limiting.

The following detailed description refers to the accompanying drawings. The same reference numbers in different drawings may identify the same or similar elements.

As used in the description herein, the terms "comprises," "comprising," "includes," "including," "has," "having," or any other variations thereof, are intended to cover a non-exclusive inclusion. For example, unless otherwise noted, a process, method, article, or apparatus that comprises a list of elements is not necessarily limited to only those elements, but may also include other elements not expressly listed or inherent to such process, method, article, or apparatus.

Further, unless expressly stated to the contrary, "or" refers to an inclusive and not to an exclusive "or". For example, a condition A or B is satisfied by one of the following: A is true (or present) and B is false (or not present), A is false (or not present) and B is true (or present), and both A and B is true (or present).

In addition, use of the "a" or "an" are employed to describe elements and components of the embodiments herein. This is done merely for convenience and to give a general sense of the inventive concept. This description should be read to include one or more, and the singular also includes the plural unless it is obvious that it is meant otherwise. Further, use of the term "plurality" is meant to convey "more than one" unless expressly stated to the contrary.

As used herein, any reference to "one embodiment," "an embodiment," "some embodiments," "one example," "for example," or "an example" means that a particular element, feature, structure or characteristic described in connection with the embodiment is included in at least one embodiment. The appearance of the phrase "in some embodiments" or "one example" in various places in the specification is not necessarily all referring to the same embodiment, for example.

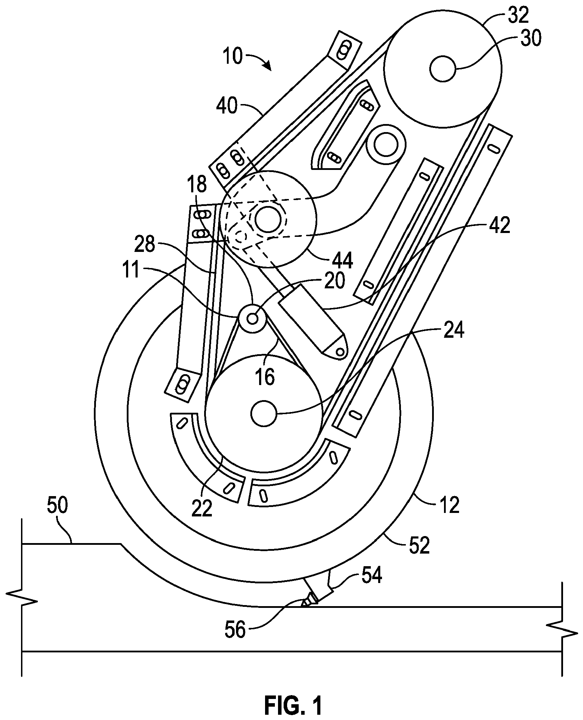

Referring now to the drawings, and in particular to FIG. 1, shown therein is a drive assembly 10 for driving a rotary tool assembly 12. The drive assembly 10 has a rotator system 11. The rotator system 11 includes at least one rotator belt 16 connected to the tool assembly 12. By way of non-limiting example, the tool assembly 12 can be any rotary tool assembly known in the art, such as a mower, an earth digging machine, a grinding machine, a road milling machine, or a reclaimer-stabilizer machine. The rotator system 11 further includes a rotator pulley 18 fixedly connected to a rotator drive shaft 20 and configured to frictionally interface with the rotator belt 16.

The drive assembly 10 include a drive pulley 22 connected to a driven shaft 24, which is connectable to the tool assembly 12 and configured to frictionally interface with the rotator belt 16. When the rotator belt 16 frictionally engages both the rotator pulley 18 and the driven pulley 22, a driving force is applied to the driven shaft 24 such that the tool assembly 12 may be selectively rotated as will be described further herein.

A drive source (not shown) provides power to the tool assembly 12 via at least one drive belt 28. The drive source can be any suitable apparatus known in the art capable of imparting rotational motion to a drive shaft 30. By way of example, the drive source can be gasoline motor, a diesel motor, an electric motor, or a steam motor. A drive pulley 32 is connected to the drive shaft 30 and configured to frictionally interface with the at least one drive belt 28. When the drive belt 28 frictionally engages both the drive pulley 32 and the driven pulley 22, a driving force is applied to the driven shaft 24 such that the tool assembly 12 is rotated.

To frictionally engage the at least one drive belt 28 with the drive pulley 32 and the driven pulley 22, the drive assembly 10 may be provided with a clutch system 40, such as the belt clutch system shown in FIG. 1. In such an embodiment, the clutch system 40 is provided with an actuator 42 to cause an idler pulley 44 to selectively tension and de-tension the drive belt 28. More particularly, the idler pulley 44 is moved in a way that the drive belt 28 is selectively tensioned to couple the drive pulley 32 and the driven pulley 22 so that rotation of the drive pulley 32 causes the driven pulley 22 and the tool assembly 12 to rotate and de-tensioned to decouple the drive pulley 32 and the driven pulley 22 allowing the drive pulley 32 to rotate without causing the driven pulley 22 and the tool assembly 12 to rotate. The actuator 42 can be any suitable apparatus known in the art capable of imparting a sufficient linear pushing and pulling force such as, for instance, a pneumatic actuator, a hydraulic actuator, or an electrically driven actuator. It should be understood, however, that such actuators have been provided by way of example only and are in no way to be construed as limiting the presently disclosed inventive concepts.

In one embodiment, the tool assembly 12 may be a road milling machine (not shown) configured to cut a pavement surface 50. The road milling machine may include a milling drum 52 provided with a tool holder 54 connected to the milling drum 52. A removable cutting tool 56 may be inserted into the tool holder 54 and may be fastened using means known in the art such as, for instance, a compression sleeve, a bolt and nut, or threaded connection.

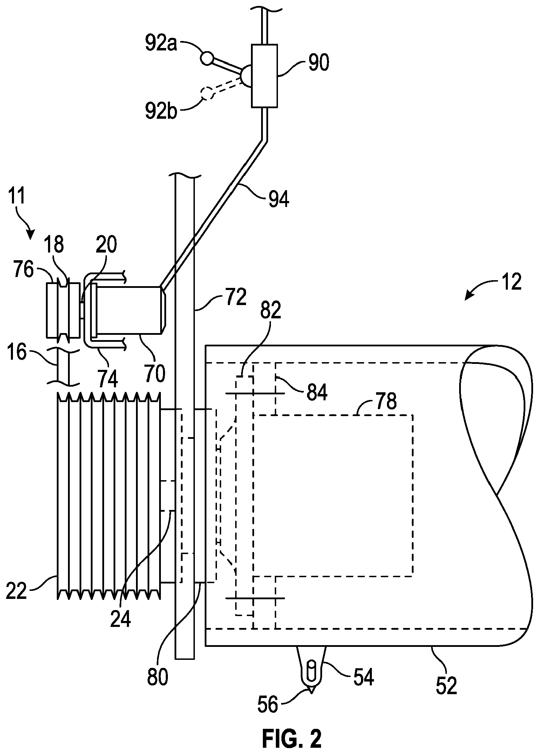

Referring now to FIGS. 1 and 2, to enable inspection, servicing, or replacing of the tool holder 54 and the cutting tool 56, the rotator system 11 is provided with a rotator power source 70 for rotating the rotator belt 16 and in turn the tool assembly 12. The rotator power source 70 can be any suitable apparatus known in the art capable of imparting rotational motion to the rotator rotator drive shaft 20. The rotator power source 70 may be connected to a fixed point relative to the driven pulley 22, such as a drum chamber 72 via a mounting bracket 74.

As shown in FIG. 2, the rotator system 11 is provided with a one way rotational clutch 76 connected to the rotator rotator drive shaft 20. When the drive source is running with the drive belt 28 tensioned to rotate the tool assembly 12, the one way rotational clutch 76 is configured to allow the rotator pulley 18 to rotate without the rotator rotator drive shaft 20 having to rotate. When the rotator power source 70 is actuated, the one way rotational clutch 76 engages the rotator pulley 18, which engages the rotator belt 16 and the driven pulley 22. The driven pulley 22 in turn imparts rotational motion on the driven shaft 24, which may be connected to a gear box 78. The gear box 78 may be connected to the milling drum 52. The gear box 78 may be a planetary or other style gearbox configured to impart controlled rotation to the milling drum 52 when engaged by the drive source or the rotator system 11. In some applications, a gearbox may not be employed, and the driven pulley 22 may directly drive the tool assembly 12.

The gear box 78 may have a first flange 80 configured to connect to the drum chamber 72 and a second flange 82 configured to connect to a mounting flange 84 of the milling drum 52.

As shown in FIG. 2, the driven pulley 22 has multiple grooves configured to frictionally interface with the at least one rotator belt 16 and the at least one drive belt 28. It should be noted that while the at least one drive belt 28 may be disengaged from the driven pulley 22, the at least one rotator belt 16 of the rotator system 11 remains engaged to the driven pulley 22. In other words, when the milling drum 52 needs to be serviced, the at least one drive belt 28 may be disengaged from the driven pulley 22, for instance, by retracting the actuator 42 (FIG. 1) of the clutch system 40 (FIG. 1). However, the at least one rotator belt 16 remains engaged with the driven pulley 22 so that the rotator system 11 may be used to rotate the milling drum 52 for service.

In one embodiment, the rotator system 11 is provided with a switch 90 configured to control the rotator power source 70. For instance, in the embodiment shown in FIG. 2, the rotator power source 70 is an electric motor, and the switch 90 is connected to the rotator power source 70 via wire 94. In one embodiment, the switch 90 may be a toggle type switch moveable between an off position 92a and an on position 92b to selectively provide power to the rotator power source 70. In another embodiment, the rotator power source 70 may be a hydraulic motor, and the switch 90 may be a valve type switch configured to control the flow or pressure of a hydraulic fluid. It should be noted that the rate of rotation of power source 70 may also be variable, as controlled by a variable rate control switch or valve means (not shown). The exemplary rotator power source and switch are provided for the purpose of illustration and should not be viewed as limiting the presently disclosed inventive concepts.

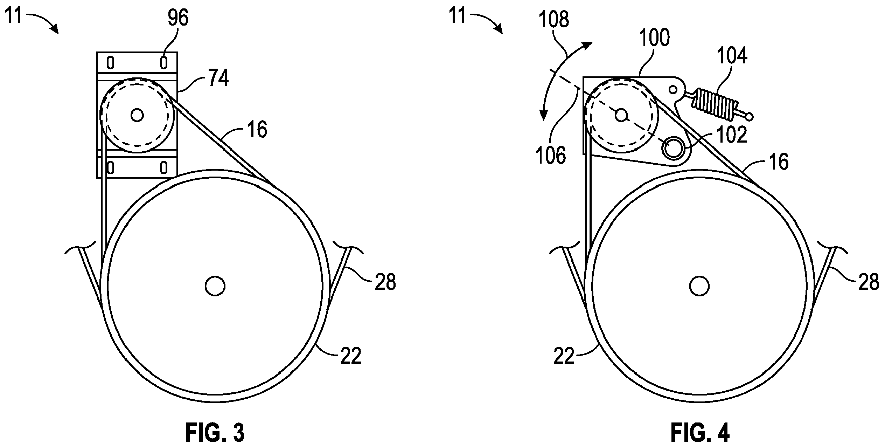

As shown in FIG. 3, in one embodiment the mounting bracket 74 of the rotator system 11 is provided with a plurality of slots 96 (only one of which is numbered in FIG. 3) configured to slidably accept bolts or other connector members (not shown) to secure the mounting bracket 74 to the drum chamber 72 (FIG. 2). In such an embodiment, the ability of the mounting bracket 74 to slide allows the rotator belt 16 to be selectively tensioned.

In another embodiment shown in FIG. 4, a mounting bracket 100 is pivotally secured to the drum chamber 72 (FIG. 2) via a pin 102 or other suitable connecting means. Tension on the rotator belt 16 is controlled by a spring 104 attached at one end to the mounting bracket 100 and the drum chamber 72 on the other. The mounting bracket 100 is configured to pivot along axis 106 following an arc 108. In this embodiment, the tension on the rotator belt 16 may be selectively controlled by using the spring 104 having an appropriate spring rate. In another embodiment (not shown), the tension on the rotator belt 16 may be controlled by adding or taking away additional springs similar to the spring 104 to achieve the desired tension.

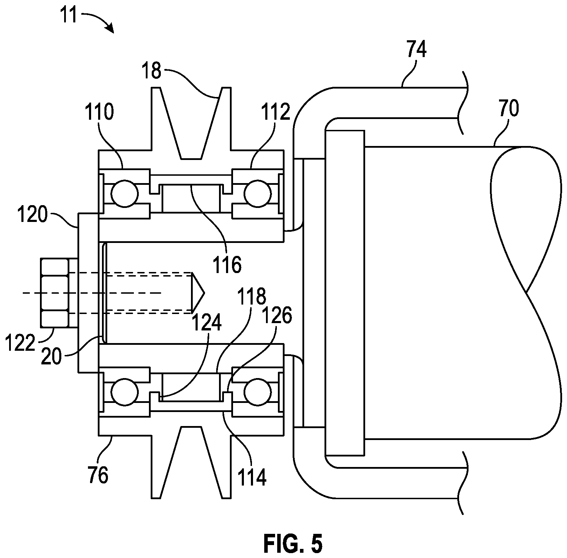

Referring now to FIG. 5, shown therein is a partial cutaway view of the one way rotational clutch 76 (also referred to as a sprag clutch) connected to the rotator rotator drive shaft 20 of the rotator power source 70. The one way rotational clutch 76 is provided with a first sealed bearing 110, a second sealed bearing 112, an outer torque sleeve 114, an outer torque sleeve key (not shown), a plurality of sprags 116 (only one of which is numbered in FIG. 5), a plurality of sprag springs (not shown), an inner torque sleeve 118, an inner torque sleeve key (not shown), a retaining washer 120, and a bolt 122.

The outer torque sleeve 114 of the one way rotational clutch 76 is concentrically surrounded by the rotator pulley 18 and rotationally secured to the rotator pulley 18 by the outer torque sleeve key. It should be noted, however, that the outer torque sleeve 114 may be rotationally secured to the rotator pulley 18 in other ways such as, for instance, a set screw (not shown) or a pin (also not shown).

The inner torque sleeve 118 concentrically surrounds at least a portion of the rotator rotator drive shaft 20 and is secured to the rotator rotator drive shaft 20 by the inner torque sleeve key or other securing means such as, for instance, a set screw (not shown) or a retaining pin (also not shown).

The outer torque sleeve 114 may be provided with a groove 124 cut into an inner face 126 configured to at least partially contain the plurality of sprags 116. The sprags 116 are cam shaped wedges made of an appropriate material such as, for instance, steel. Each of the sprags 116 is spaced apart by a predetermined distance from each other and is placed at an angle to permit rotation in one direction, yet transmit power from the inner torque sleeve 118 to the outer torque sleeve 114 by a wedging action when rotated in the opposite direction.

The plurality of sprags 116 are held in position relative to one another by the plurality of sprag springs which may be placed in the space between each of the plurality of sprags 116. It should be noted, however, that in another embodiment the one way clutch 76 may be provided having a single sprag spring (not shown) that biases the plurality of sprags 116 radially in one direction.

It should be noted that although a sprag type one way rotational clutch is illustrated herein, any type of one way clutch may be used. It is also to be understood that the entire one way rotational clutch that is illustrated could be replaced by an electrically or hydraulically activated two way locking clutch that would, when engaged, allow rotation of the milling drum 52 in either direction. In such an embodiment, a dual direction, variable speed controller (not shown) may be provided which is configured to activate the two way locking clutch and the rotator power source 70 either simultaneously or in sequence.

From the above description, it is clear that the inventive concepts disclosed herein are well adapted to carry out the objects and to attain the advantages mentioned herein as well as those inherent in the inventive concepts disclosed herein. While exemplary embodiments of the inventive concepts disclosed herein have been described for purposes of this disclosure, it will be understood that numerous changes may be made which will readily suggest themselves to those skilled in the art and which are accomplished within the scope and coverage of the inventive concepts disclosed herein.

Embodiments of the invention:
1. A drive assembly, comprising:
   a drive pulley;
   a driven pulley spaced apart from the drive pulley, the driven pulley supporting a tool assembly;
   a drive belt connected to the drive pulley and the driven pulley, the drive belt selectively tensioned to couple the drive pulley and the driven pulley so that rotation of the drive pulley causes the driven pulley and the tool assembly to rotate and de-tensioned to decouple the drive pulley and the driven pulley allowing the drive pulley to rotate without causing the driven pulley and the tool assembly to rotate;
   a rotator pulley spaced apart from the driven pulley; and
   a rotator belt coupling the rotator pulley and the driven pulley in a way that when the drive belt is decoupled from the drive pulley and the driven pulley rotation of the rotator pulley causes the driven pulley and the tool assembly to rotate.
2. The drive assembly of embodiment 1, wherein the rotator belt remains engaged with the driven pulley and the rotator pulley when the drive belt is coupled to the drive pulley and the driven pulley.
3. The drive assembly of embodiment 1, wherein the rotator pulley is selectively powered by a rotator power source.
4. The drive assembly of embodiment 3, wherein the rotator power source is operable bi-directionally.
5. The drive assembly of embodiment 3, wherein the rotator pulley is connected to the rotator power source via a rotator drive shaft.
6. The drive assembly of embodiment 4, further comprising a clutch selectively coupling the rotator drive shaft and the rotator pulley such that when the clutch is disengaged, the rotator pulley freely rotates and when the clutch is engaged, the clutch couples the rotator pulley and the rotator drive shaft such that rotation of the rotator drive shaft causes the rotator pulley to rotate.
7. The drive assembly of embodiment 6, wherein the clutch is a one-way rotational clutch.
8. The drive assembly of embodiment 6, wherein the clutch is a two-way rotational clutch.
9. The drive assembly of embodiment 1, wherein the rotator system further comprises means for selectively tensioning the rotator belt.
10. The drive assembly system of embodiment 3, further comprising a switch to control the rotator power source such that when the switch is in an on position the rotator power source is engaged with the drive pulley and when the switch is in an off position the rotator power source is disengaged from the drive pulley.
11. The drive assembly of embodiment 10, wherein the rotator power source is a variable speed rotator power source and the switch is configured to allow the variable speed rotator power source to be engaged with the drive pulley at more than one speed.
12. The drive assembly of embodiment 10, wherein the rotator power source is a bidirectional variable speed rotator power source and the switch is configured to allow the bidirectional variable speed rotator power source to be engaged with the rotator pulley at more than one speed.
13. The drive assembly of embodiment 1, wherein the rotator pulley is selectively movable for adjusting the tension of the rotator belt.
14. The drive assembly of embodiment 13, wherein rotator pulley is biased to maintain a selected tension on the rotator belt.
15. A method for selectively rotating a tool assembly, comprising:
   de-tensioning a drive belt connected to a drive pulley and a driven pulley so as to decouple the driven pulley from the drive pulley, the driven pulley supporting the tool assembly; and
   rotating a rotator pulley to cause a rotator belt coupling the rotator pulley to the driven pulley to rotate the driven pulley and the tool assembly.
16. The method of embodiment 15, wherein the rotator belt remains engaged with the driven pulley when the drive belt is coupled to the drive pulley and the driven pulley to couple the drive pulley and the driven pulley so that rotation of the drive pulley causes the driven pulley and the tool assembly to rotate.
17. The method of embodiment 15, wherein the rotator pulley is rotated with a rotator power source.
18. The method of embodiment 17, wherein the rotator power source is connected to the rotator pulley with a rotator drive shaft to rotate the rotator pulley, and wherein the method further comprises coupling the rotator drive shaft and the rotator pulley with a clutch so that when the clutch is disengaged the rotator pulley freely rotates and when the clutch is engaged the clutch couples the rotator pulley and the rotator drive shaft such that rotation of the rotator drive shaft causes the driven pulley and the tool assembly to rotate.
19. The method of embodiment 15, further comprising adjusting the tension of the rotator belt.
20. The method of embodiment 17, further comprising controlling the rotator power source between an on position wherein the rotator power source is engaged with the rotator pulley and an off position wherein the rotator power source is disengaged from the rotator pulley.
21. The method of embodiment 20, further comprising controlling the speed of the rotator power source to allow rotator power source to be engaged with the rotator pulley at more than one speed.
22. The method of embodiment 20, further comprising controlling the direction of the rotator power source to allow the rotator power source to be engaged with the rotator pulley bi-directionally.
23. A drive assembly, comprising:
   a drive pulley;
   a driven pulley spaced apart from the drive pulley, the driven pulley supporting a tool assembly;
   a drive belt connected to the drive pulley and the driven pulley, the drive belt selectively tensioned to couple the drive pulley and the driven pulley so that rotation of the drive pulley causes the driven pulley and the tool assembly to rotate and de-tensioned to decouple the drive pulley and the driven pulley allowing the drive pulley to rotate without causing the driven pulley and the tool assembly to rotate;
   a rotator pulley spaced apart from the driven pulley; and
   a rotator belt coupling the rotator pulley and the driven pulley in a way that when the drive belt is decoupled from the drive pulley and the driven pulley rotation of the rotator pulley causes the driven pulley and the tool assembly to rotate.
24. The drive assembly of embodiment 23, wherein the rotator belt remains engaged with the driven pulley and the rotator pulley when the drive belt is coupled to the drive pulley and the driven pulley.
25. The drive assembly of embodiment 23, wherein the rotator pulley is selectively powered by a rotator power source.
26. The drive assembly of embodiment 25, wherein the rotator power source is operable bi-directionally.
27. The drive assembly of embodiment 25, wherein the rotator pulley is connected to the rotator power source via a rotator drive shaft.
28. The drive assembly system of embodiment 25, further comprising a switch to control the rotator power source such that when the switch is in an on position the rotator power source is engaged with the drive pulley and when the switch is in an off position the rotator power source is disengaged from the drive pulley.
29. The drive assembly of embodiment 28, wherein the rotator power source is a variable speed rotator power source and the switch is configured to allow the variable speed rotator power source to be engaged with the drive pulley at more than one speed.
30. The drive assembly of embodiment 28, wherein the rotator power source is a bidirectional variable speed rotator power source and the switch is configured to allow the bidirectional variable speed rotator power source to be engaged with the rotator pulley at more than one speed.
31. The drive assembly of any one of embodiments 23-30, further comprising a clutch selectively coupling the rotator drive shaft and the rotator pulley such that when the clutch is disengaged, the rotator pulley freely rotates and when the clutch is engaged, the clutch couples the rotator pulley and the rotator drive shaft such that rotation of the rotator drive shaft causes the rotator pulley to rotate.
32. The drive assembly of embodiment 31, wherein the clutch is a one-way rotational clutch.
33. The drive assembly of embodiment 31, wherein the clutch is a two-way rotational clutch.
34. The drive assembly of any one of embodiments 23-33, wherein the rotator system further comprises means for selectively tensioning the rotator belt.
35. The drive assembly of any one of embodiments 23-33, wherein the rotator pulley is selectively movable for adjusting the tension of the rotator belt.
36. The drive assembly of embodiment 35, wherein rotator pulley is biased to maintain a selected tension on the rotator belt.
37. A method for selectively rotating a tool assembly, comprising:
   de-tensioning a drive belt connected to a drive pulley and a driven pulley so as to decouple the driven pulley from the drive pulley, the driven pulley supporting the tool assembly; and
   rotating a rotator pulley to cause a rotator belt coupling the rotator pulley to the driven pulley to rotate the driven pulley and the tool assembly.
38. The method of embodiment 37, wherein the rotator belt remains engaged with the driven pulley when the drive belt is coupled to the drive pulley and the driven pulley to couple the drive pulley and the driven pulley so that rotation of the drive pulley causes the driven pulley and the tool assembly to rotate.
39. The method of embodiment 37, wherein the rotator pulley is rotated with a rotator power source.
40. The method of any one of embodiments 37-39, wherein the rotator power source is connected to the rotator pulley with a rotator drive shaft to rotate the rotator pulley, and wherein the method further comprises coupling the rotator drive shaft and the rotator pulley with a clutch so that when the clutch is disengaged the rotator pulley freely rotates and when the clutch is engaged the clutch couples the rotator pulley and the rotator drive shaft such that rotation of the rotator drive shaft causes the driven pulley and the tool assembly to rotate.
41. The method of any one of embodiments 39 or 40, further comprising adjusting the tension of the rotator belt.
42. The method of any one of embodiments 39-41, further comprising controlling the rotator power source between an on position wherein the rotator power source is engaged with the rotator pulley and an off position wherein the rotator power source is disengaged from the rotator pulley.
43. The method of any one of embodiments 39-41, further comprising controlling the speed of the rotator power source to allow rotator power source to be engaged with the rotator pulley at more than one speed.
44. The method of any one of embodiments 39-43, further comprising controlling the direction of the rotator power source to allow the rotator power source to be engaged with the rotator pulley bi-directionally.

## Claims

1. A drive assembly, comprising:
a drive pulley;
a driven pulley spaced apart from the drive pulley, the driven pulley supporting a tool assembly;
a drive belt connected to the drive pulley and the driven pulley, the drive belt selectively tensioned to couple the drive pulley and the driven pulley so that rotation of the drive pulley causes the driven pulley and the tool assembly to rotate and de-tensioned to decouple the drive pulley and the driven pulley allowing the drive pulley to rotate without causing the driven pulley and the tool assembly to rotate;
a rotator pulley spaced apart from the driven pulley; and
a rotator belt coupling the rotator pulley and the driven pulley in a way that when the drive belt is decoupled from the drive pulley and the driven pulley rotation of the rotator pulley causes the driven pulley and the tool assembly to rotate.

2. The drive assembly of claim 1, wherein the rotator belt remains engaged with the driven pulley and the rotator pulley when the drive belt is coupled to the drive pulley and the driven pulley.

3. The drive assembly of claim 1, wherein the rotator pulley is selectively powered by a rotator power source, wherein optionally the rotator power source is operable bi-directionally, wherein optionally the rotator pulley is connected to the rotator power source via a rotator drive shaft.

4. The drive assembly system of claim 3, further comprising a switch to control the rotator power source such that when the switch is in an on position the rotator power source is engaged with the drive pulley and when the switch is in an off position the rotator power source is disengaged from the drive pulley.

5. The drive assembly of claim 4, wherein the rotator power source is a variable speed rotator power source and the switch is configured to allow the variable speed rotator power source to be engaged with the drive pulley at more than one speed, wherein preferably the variable speed rotator power source is a bidirectional variable speed rotator power source.

6. The drive assembly of any one of claims 1-5, further comprising a clutch selectively coupling the rotator drive shaft and the rotator pulley such that when the clutch is disengaged, the rotator pulley freely rotates and when the clutch is engaged, the clutch couples the rotator pulley and the rotator drive shaft such that rotation of the rotator drive shaft causes the rotator pulley to rotate.

7. The drive assembly of claim 6, wherein the clutch is a one-way rotational clutch, or wherein the clutch is a two-way rotational clutch.

8. The drive assembly of any one of claims 1-7, wherein the rotator system further comprises means for selectively tensioning the rotator belt.

9. The drive assembly of any one of claims 1-7, wherein the rotator pulley is selectively movable for adjusting the tension of the rotator belt, wherein preferably the rotator pulley is biased to maintain a selected tension on the rotator belt.

10. A method for selectively rotating a tool assembly, comprising:
de-tensioning a drive belt connected to a drive pulley and a driven pulley so as to decouple the driven pulley from the drive pulley, the driven pulley supporting the tool assembly; and
rotating a rotator pulley to cause a rotator belt coupling the rotator pulley to the driven pulley to rotate the driven pulley and the tool assembly.

11. The method of claim 10, wherein the rotator belt remains engaged with the driven pulley when the drive belt is coupled to the drive pulley and the driven pulley to couple the drive pulley and the driven pulley so that rotation of the drive pulley causes the driven pulley and the tool assembly to rotate.

12. The method of claim 10, wherein the rotator pulley is rotated with a rotator power source.

13. The method of claim 12, wherein the rotator power source is connected to the rotator pulley with a rotator drive shaft to rotate the rotator pulley, and wherein the method further comprises coupling the rotator drive shaft and the rotator pulley with a clutch so that when the clutch is disengaged the rotator pulley freely rotates and when the clutch is engaged the clutch couples the rotator pulley and the rotator drive shaft such that rotation of the rotator drive shaft causes the driven pulley and the tool assembly to rotate.

14. The method of claims of any one of claims 12 or 13, further comprising adjusting the tension of the rotator belt.

15. The method of any one of claims 12-14, further comprising controlling the rotator power source between an on position wherein the rotator power source is engaged with the rotator pulley and an off position wherein the rotator power source is disengaged from the rotator pulley.

16. The method of any one of claims 12-14, further comprising controlling the speed of the rotator power source to allow the rotator power source to be engaged with the rotator pulley at more than one speed, or controlling the direction of the rotator power source to allow the rotator power source to be engaged with the rotator pulley bi-directionally.
